# EUROPÄISCHE PATENTSCHRIFT

(11) **EP 1 492 837 B1**
(45) Veröffentlichungstag und Bekanntmachung des Hinweises auf die Patenterteilung: **06.07.2005**
(21) Anmeldenummer: 03712130.8
(22) Anmeldetag: 03.04.2003
(51) Int. Cl.: C08G 77/42, C08F 261/04, C08F 263/04

(54) **SILIKONORGANOCOPOLYMERE UND DEREN VERSEIFUNGSPRODUKTE**
ORGANOFUNCTIONAL SILICONE COPOLYMERS AND THE SAPONIFICATION PRODUCTS THEREOF
POLYMERES ORGANOSILICIES ET LEURS PRODUITS DE SAPONIFICATION

(30) Priorität: 11.04.2002 DE 10215962
(43) Veröffentlichungstag der Anmeldung: 05.01.2005
(73) Patentinhaber: Wacker Polymer Systems GmbH & Co. KG, 84489 Burghausen (DE)
(72) Erfinder: STARK, Kurt, 84508 Burgkirchen (DE); SINGER, Robert, 84489 Burghausen (DE)
(74) Vertreter: Schuderer, Michael, Dr.
(86) Internationale Anmeldenummer: PCT/EP2003/003488
(87) Internationale Veröffentlichungsnummer: WO 2003/085035

(56) Entgegenhaltungen:
- EP-A- 0 416 850
- EP-A- 0 444 827
- PATENT ABSTRACTS OF JAPAN vol. 003, no. 101 (M-070), 25. August 1979 (1979-08-25) & JP 54 076394 A (SEKISUI CHEM CO LTD), 18. Juni 1979 (1979-06-18)

## Beschreibung

Die Erfindung betrifft transparente, migrationsarme Silikonorganocopolymere mit definierter Schmelzrheologie, deren Verseifungsprodukte, Verfahren zu deren Herstellung, sowie deren Verwendung.

Festharze von Vinylesterpolymeren oder insbesondere von Vinylester-Ethylen-Copolymeren neigen häufig zum Verblocken. Es ist aus der EP-A 959114 bekannt, dass die Oberflächenklebrigkeit von Vinylester-Ethylen-Copolymeren durch Copolymerisation mit Propylen verringert werden kann. Weiter ist bekannt, dass Silikone gute Release-Eigenschaften haben, das heißt eine klebrige Stoffe abweisende Oberfläche haben. Abmischungen bzw. Blends von Vinylester-Festharzen mit Silikonen haben allerdings unbefriedigende Eigenschaften: Aufgrund der Unverträglichkeit von Vinylesterpolymer und Silikon kommt es zur Phasenseparation bzw. zur Ausbildung von Silikondomänen und damit zur Trübung der Festharze. Die Ausbildung von Silikondomänen und das Vorliegen nicht angebundenen Silikons führt darüber hinaus zu Migrationseffekten.

Aus dem Stand der Technik sind eine Reihe von Verfahren bekannt, bei denen Organopolymere mit Silikonen in der Weise modifiziert werden, dass die Monomeren in Gegenwart eines Silikons polymerisiert werden:

Die EP-A 0352339 beschreibt Schutzanstriche für Betonkonstruktionen, welche Copolymerisate von Divinyl-Polydimethylsiloxan mit Acrylat- bzw. Methacrylatestern und mit Vinyl- bzw. Acrylfunktionellen Alkoxysilanen als Lösung in organischen Lösungsmitteln enthalten. Wärmehärtbare Acrylharzlösungen in organischen Lösungsmitteln, welche zur Beschichtungen von Metallen, insbesondere Edelstahl eingesetzt werden, sind Gegenstand der EP-A 159894: Zur Verbesserung der Metallhaftung, insbesondere zur Verhinderung des Abblätterns der Beschichtung bei Verformung der beschichteten Metallteile, werden Acrylharzlösungen eingesetzt, von Copolymerisaten aus (Meth)acrylat, hydroxy- oder epoxyfunktionellem (Meth)acrylat, vinylfunktionellem Polysiloxan und vinylfunktionellem Silan. Zur Haftungsverbesserung werden die Polymerisate mittels organischen Zinnverbindungen als Vernetzungskatalysatoren nachvernetzt und thermisch ausgehärtet.

In der EP-B 771826 werden wässrige Bindemittel für Coatings und Klebemittel auf der Basis von Emulsionspolymerisaten von Vinylestern, Acryl- oder Methacrylsäureestern oder Vinylaromaten beschrieben, welche als Vernetzer Polysiloxane mit ungesättigten Resten, beispielsweise Vinyl-, Acryloxy- bzw. Methacryloxy-Gruppen, enthalten. Dabei wird das organische Monomer emulgiert und polymerisiert und nach einem bestimmten Zeitpunkt wird während der Reaktion das Silikon zugesetzt. Als Additive können niedermolekulare, polymerisierbare oder nicht polymerisierbare Silane nachträglich zugesetzt werden, die eine weitere, nachträgliche Vernetzung des Polymerisats mit Organozinnverbindungen ermöglichen.

In der EP-A 943634 werden wässrige Latices zur Verwendung als Beschichtungsmittel beschrieben, welche durch Copolymerisation von ethylenisch ungesättigten Monomeren in Gegenwart eines Silanolgruppen enthaltenden Siliconharzes hergestellt werden. Es bilden sich dabei interpenetrating networks (IPN) zwischen den Polymerketten und Polysiloxanketten. Die EP-A 1095953 beschreibt mit Silikon gepfropfte Vinylcopolymere, wobei ein Carbosiloxan-Dendrimer auf dem Vinylpolymerisat aufgepfropft ist.

Der Einsatz von vinylfunktionalisierten Silikonen ist im Stand der Technik ebenfalls bekannt. Meist werden die Vinylsilikone mit H-Silikonen (Organohydrogenpolysiloxane) mittels eines Katalysator (meist Pt-Verbindung) im Zuge einer Hydrosilylierungsreaktion umgesetzt, was beispielsweise in der EP-A 545591 beschrieben wird. Die US-A 4987180 beschreibt die Emulsionspolymerisation eines radikalisch polymerisierbaren Silikons, das beispielsweise Mercapto-, Vinyl- oder Methacryloxypropylgruppen entlang der Kette enthält und als Emulsion in Wasser vorliegt, mit Acryl- bzw. Methacrylestern, wobei bis zu 10 Gew.-% des (Meth)Acrylatmonomers durch weitere funktionalisierte Monomere, wie Glycidylmethacrylat (GMA), N-Methylolacrylamid (NMA) oder Acrylsäure, und bis zu 20 Gew.-% des (Meth)Acrylmonomers durch weitere Monomere, wie Styrol oder Vinylacetat, ersetzt werden können. Die Emulsion kann ferner mit H-Silikonen versetzt und anschließend mit einem Katalysator noch weiter vernetzt werden.

Polysiloxanvernetzte Styrol-Butadien-Copolymere sind aus der US-A 5086141 bekannt, wobei die vernetzten Copolymere nach dem Suspensionspolymerisationsverfahren hergestellt werden. Die US-A 5468477 betrifft Vinylsiloxanpolymerisate, welche durch Polymerisation in Gegenwart von Mercapto-funktionellem Silikon hergestellt werden.

Die DE-A 10064092 betrifft Polyorganosiloxane zur Herstellung abhäsiver Beschichtungen, welche ohne Zufuhr von thermischer Energie oder Strahlung aushärten. Es handelt sich dabei um Silikonblockcopolymere aus einer vernetzbaren Hartsegment-Polymerkomponente und einer Weichsegment-Polyorganosiloxan-Komponente. Diese Silikonblockcopolymere werden durch Kopplungsreaktion der Blocksegmente oder durch Polymerisation der Hartsegment-Komponente in Gegenwart von Polyorganosiloxan hergestellt.

Die mit diesen Verfahren zugänglichen Produkte können allerdings bezüglich der Transparenz, der Migration und des Schmelzverhaltens nicht befriedigen. Es bestand daher die Aufgabe, ein Vinylester-Festharz zur Verfügung zu stellen, welches sich durch hohe Transparenz, niedrige oder fehlende Migration, vorteilhafte Schmelzrheologie und damit durch ein exzellentes thermoplastisches Verarbeitungsverhalten auszeichnet.

Gegenstand der Erfindung sind Silikonorganocopolymere und deren Verseifungsprodukte, erhältlich mittels Polymerisation in einem nichtwässrigen Lösungsmittel, in Gegenwart von Radikalinitiatoren, von
a1) ≥ 50 Gew.-% eines oder mehrerer Monomere aus der Gruppe umfassend Vinylester von unverzweigten oder verzweigten Alkylcarbonsäuren mit 1 bis 15 C-Atomen, und
a2) 0 bis 20 Gew.-% eines oder mehrerer Monomere aus der Gruppe umfassend einfach ungesättigte Olefine sowie Diene; und
b) 1 bis 50 Gew.-% von einem oder mehreren Silikonen mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis ≤ 50/50 eingesetzt werden, und
c) 0 bis 10 Gew.-% von einem oder mehreren hydrolysierbaren Silan-Monomeren aus der Gruppe umfassend ethylenisch ungesättigte, hydrolysierbare Siliciumverbindungen und hydrolysierbare Siliciumverbindungen aus der Gruppe der Mercaptosilane,
wobei die Angaben in Gew.-% für die Komponenten a) bis c) jeweils auf das Gesamtgewicht der eingesetzten Monomere bezogen sind und sich auf 100 Gew.-% aufaddieren,
dadurch gekennzeichnet, dass als nichtwässriges Lösungsmittel ein Gemisch aus mindestens zwei nichtwässrigen Lösungsmitteln eingesetzt wird, von denen mindestens ein nichtwässriges Lösungsmittel eine Übertragungskonstante Cₛ zu Vinylacetat, von > 20 x 10⁻⁴ bei 70°C aufweist,
und gegebenenfalls Verseifung der damit erhältlichen Produkte.

Geeignete Vinylester a1) sind Vinylester von unverzweigten oder verzweigten Alkylcarbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Shell, (Vinylester von α-verzweigten Monocarbonsäuren mit 9 oder 10 C-Atomen)). Besonders bevorzugt ist Vinylacetat. Geeignete Comonomere a2) sind Ethylen, Propylen, 1,3-Butadien und Isopren. Bevorzugt ist Ethylen.

Gegebenenfalls können noch 0.1 bis 20 Gew.-%, bezogen auf das Gesamtgewicht der eingesetzten Monomere a), Hilfsmonomere copolymerisiert werden. Beispiele für Hilfsmonomere sind Vinylchlorid, Acryl- und Methacrylsäure und Monomere aus der Gruppe der Ester der Acrylsäure oder Methacrylsäure, wie Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Weitere Hilfsmonomere sind Glycidyl(meth)acrylat und ethylenisch ungesättigte Monocarbonsäuren, wie Crotonsäure, und Dicarbonsäuren, wie Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Als Hilfsmonomere geeignet sind auch kationische Monomere wie Diallyldimethylammoniumchlorid (DAD-MAC), 3-Trimethylammoniumpropyl(meth)acrylamidchlorid (MAPTAC) und 2-Trimethylammoniumethyl(meth)acrylatchlorid. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der I-sobutoxyether oder Ester des N-Methylolacrylamids, des N-Methylolmethacrylamids und des N-Methylolallylcarbamats.

Geeignete Silikone b) sind lineare oder verzweigte Polydialkylsiloxane mit einer Kettenlänge von 10 bis 1000, bevorzugt 20 bis 500 SiR₂O-Einheiten. Vorzugsweise beträgt der Anteil an Silikon b) 5 bis 40 Gew.-%, bezogen auf das Gesamtgewicht der Einheiten a), b) und gegebenenfalls c).

In der allgemeinen Formel R¹ₐR₃₋ₐSiO(SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, isoPentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, Acryloxymethyl- und 3-Acryloxypropyl-Gruppe.

Bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butylrest.

Bevorzugt sind auch Gemische von linearen oder verzweigten Divinyl-Polydimethylsiloxanen mit linearen oder verzweigten Monovinyl-Polydimethylsiloxanen und/oder unfunktionalisierten Polydimethylsiloxanen (letztere besitzen keine polymerisierbare Gruppe). Die Vinylgruppen befinden sich am Kettenende. Beispiele für solche Gemische sind Silikone der lösemittelfreien Dehesive®-6-Reihe (verzweigt) oder Dehesive®-9-Reihe (unverzweigt) der Wacker-Chemie GmbH. Bei den binären oder ternären Gemischen beträgt der Anteil der unfunktionellen Polydialkylsiloxane bis zu 15 Gew.-%, vorzugsweise bis zu 5 Gew.-%; der Anteil der monofunktionellen Polydialkylsiloxane bis zu 50 Gew.-%; und der Anteil der difunktionellen Polydialkylsiloxane mindestens 50 Gew.-%, vorzugsweise mindestens 60 Gew.-%, jeweils bezogen auf das Gesamtgewicht des Silikonanteils b).

Am meisten bevorzugt als Silikon b) werden α,ω-Divinyl-Polydimethylsiloxane, oder ein binäres Gemisch von α,ω-Divinyl-Polydimethylsiloxanen mit α-Monovinyl-Polydimethylsiloxanen, oder ein ternäres Gemisch von α,ω-Divinyl-Polydimethylsiloxanen, α-Monovinyl-Polydimethylsiloxanen mit unfunktionalisiertem Polydimethylsiloxan.

Neben diesen Monomeren können zusätzlich noch hydrolysierbare Silanmonomere c) copolymerisiert werden. Geeignete.hydrolysierbare Siliciumverbindungen sind beispielsweise ethylenisch ungesättigte und damit copolymerisierbare Siliciumverbindungen der allgemeinen Formel R³SiR²₀₋₂(OR⁴)₁₋₃, wobei R² die Bedeutung C₁- bis C₃-Alkylrest, C₁- bis C₃-Alkoxyrest oder Halogen (z.B. Cl oder Br) hat, R³ die Bedeutung CH₂=CR³-(CH₂)₀₋₁ oder CH₂=CR⁵CO₂(CH₂)₁₋₃ hat, R⁴ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R⁵ für H oder CH₃ steht.

Bevorzugt sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele für geeignete Siliciumverbindungen sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Silane.

Als Silane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische, insbesondere Gemische von 2 oder mehreren Silanen aus der Gruppe umfassend von 3-Methacryloxypropyltrimethoxysilan oder Methacryloxymethyltrimethoxysilan mit Vinyltrimethoxysilan und Vinyltriethoxysilan.

Am meisten bevorzugt werden Silikonorganocopolymere, welche als Monomereinheiten a) Vinylacetat, oder Vinylacetat und Ethylen, oder Vinylacetat und VeoVa9, oder Vinylacetat und VeoVa10, oder Vinylacetat, Ethylen und VeoVa10 enthalten; und welche als Silikon b) ein binäres Gemisch von α,ω-Divinyl-Polydimethylsiloxan mit α-Monovinyl-Polydimethylsiloxan oder ein ternäres Gemisch von α,ω-Divinyl-Polydimethylsiloxan, α-Monovinyl-Polydimethylsiloxan mit unfunktionalisiertem Polydimethylsiloxan enthalten.

Die Herstellung der Silikonorganocopolymere erfolgt mittels Polymerisation in einem nichtwässrigen, organischen Lösungsmittel, in Gegenwart von Radikalinitiatoren, wobei als nichtwässriges Lösungsmittel ein Gemisch aus mindestens zwei nichtwässrigen Lösungsmitteln eingesetzt wird, von denen mindestens ein nichtwässriges Lösungsmittel eine Übertragungskonstante Cₛ zu Vinylacetat von Cₛ > 20 x 10⁻⁴ bei 70°C aufweist. Die Reaktionstemperatur beträgt 20°C bis 100°C, vorzugsweise 40°C bis 80°C. Im allgemeinen wird bei Normaldruck polymerisiert. Bei der Copolymerisation von bei Raumtemperatur gasförmigen Monomeren wie Ethylen wird unter Druck, im allgemeinen zwischen 1 und 100 bar, gearbeitet. Im allgemeinen wird die Polymerisation bis zu einem Festgehalt von 15 bis 90 %, bevorzugt bis zu einem Festgehalt von 20 bis 60 %, durchgeführt.

Geeignete Radikalinitiatoren sind öllösliche Initiatoren, wie t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan und Di-(4-t-Butylcyclohexyl)peroxydicarbonat. Geeignet sind auch Azoinitiatoren wie Azobisisobutyronitril. Die Initiatoren werden im allgemeinen in einer Menge von 0.005 bis 3.0 Gew.-%, bevorzugt 0.1 bis 1.5 Gew.-%, bezogen auf Gesamtmonomer, eingesetzt.

Die Einstellung.des Molekulargewichts und des Polymerisationsgrads ist dem Fachmann bekannt. Diese kann z.B. durch Zugabe von Regler, durch den Lösungsmittelgehalt, durch Variation der Initiatorkonzentration und durch Variation der Temperatur erfolgen. Regler oder Kettentransfermittel sind zum Beispiel Acetaldehyd oder Merkaptogruppenhaltige Verbindungen, wie Dodecylmerkaptan oder merkaptogruppenhaltige Silikone.

Geeignete nichtwässrige, organische Lösungsmittel sind beispielsweise Tetrahydrofuran (THF), Chloroform (Cₛ = 554 x 10⁻⁴ bei 70°C), Petrolether, Heptan (Cₛ = 17 x 10⁻⁴ bei 50°C), Cyclohexan (Cₛ = 7 x 10⁻⁴ bei 60°C), Ethylacetat (Cₛ = 7.8 x 10-⁴ bei 70°C), Methylacetat (Cₛ = 1.6 x 10⁻⁴ bei 60°C), Isopropanol (Cₛ = 44.6 x 10⁻⁴ bei 70°C), Ethanol (Cₛ = 26.3 x 10⁻⁴ bei 70°C), Methanol (Cₛ = 5.5 x 10⁻⁴ bei 70°C), t-Butanol (Cₛ = 0.5 x 10⁻⁴ bei 70°C), Aceton (Cₛ = 26 x 10⁻⁴ bei 70°C), Toluol (Cₛ = 21.1 x 10⁻⁴ bei 70°C), Benzol (Cₛ = 5.3 x 10⁻⁴ bei 70°C), Methylethylketon (Cₛ = 73.8 x 10⁻⁴ bei 60°C), Diethylether (Cₛ = 45.3 x 10⁻⁴ bei 60°C) oder p-Dioxan (Cₛ = 49.1 x 10⁻⁴ bei 70°C), wobei sich die Cₛ-Werte auf Vinylacetat beziehen. Die Übertragungskonstante Cₛ der nichtwässrigen Lösungsmittel kann beispielsweise aus Polymer Handbook 4^{th} Edition (1999), Kap II entnommen werden, wobei die Werte für Vinylacetat auf den Seiten 142 bis 149 aufgeführt sind. Oben stehende Werte für Cₛ wurden dieser Literaturstelle entnommen.

Bevorzugte Lösungsmittel mit Cₛ > 20 x 10⁻⁴ bei 70°C sind Ethanol und Isopropanol. Bei den Lösungsmittelgemischen beträgt der Anteil an Lösungsmittel mit Cₛ > 20 x 10⁻⁴ im allgemeinen 3 bis 50 Gew.-%, vorzugsweise 5 bis 30 Gew.-%, besonders bevorzugt 7 bis 20 Gew.-%. Besonders bevorzugt werden Lösungsmittelgemische mit Isopropanol; am meisten bevorzugt wird ein Gemisch aus Ethylacetat und Isopropanol.

Die Polymerisation kann unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Vorzugsweise wird so vorgegangen, dass 3 bis 40 Gew.-% eines Gemisches aus den Monomeren a), b) und gegebenenfalls c) in den gewünschten Mengenverhältnissen vorgelegt werden und der Rest der Monomere a), b) und gegebenenfalls c) als Gemisch zudosiert wird. Weiter ist bevorzugt, den Initiator teilweise, vorzugsweise zu 3 bis 50 Gew.-%, vorzulegen, und den Rest zuzudosieren. Besonders bevorzugt werden die Monomere a), b) und gegebenenfalls c) so zugegeben, dass deren Verhältnis zu jedem Zeitpunkt der Polymerisation stets konstant bleibt.

Nach Abschluß der Polymerisation kann zur Restmonomerentfernung in Anwendung bekannter Methoden nachpolymerisiert werden. Flüchtige Restmonomere und weitere flüchtige Bestandteile können auch mittels Destillation, vorzugsweise unter reduziertem Druck, entfernt werden.

Die Silikonorganocopolymere können in Form deren Lösung oder nach Entfernung des Lösungsmittels bzw. Ausfällen des Harzanteils als Festharz verwendet werden. Im letzteren Fall geht man im allgemeinen so vor, dass das Harz aufgeschmolzen wird und anschließend zu Granulat verarbeitet wird.

Zur Herstellung der Verseifungsprodukte wird das Silikonorganocopolymere in dem Fachmann bekannter Weise in alkoholischer Lösung verseift, wobei die dabei üblichen sauren oder alkalischen Katalysatoren eingesetzt werden. Geeignete Lösungsmittel sind aliphatische Alkohole mit 1 bis 6 C-Atomen, vorzugsweise Methanol oder Ethanol. Die Verseifung kann aber auch in einer Mischung bestehend aus Wasser und aliphatischem Alkohol durchgeführt werden. Saure Katalysatoren sind beispielsweise starke Mineralsäuren, wie Salzsäure oder Schwefelsäure, oder starke organische Säuren, wie aliphatische oder aromatische Sulphonsäuren. Bevorzugt werden alkalische Katalysatoren eingesetzt. Dies sind beispielweise die Hydroxide, Alkoholate und Carbonate von Alkali- oder Erdalkalimetallen. Die Katalysatoren werden in Form deren wässrigen oder alkoholischen Lösungen eingesetzt. Die eingesetzten Mengen an alkalischem Katalysator betragen im allgemeinen 0.2 bis 20.0 Mol-%, bezogen auf Silikonorganopolymer.

Die Verseifung wird im allgemeinen bei Temperaturen von 20°C bis 70°C, vorzugsweise 30°C bis 60°C, durchgeführt. Durch Zugabe der Katalysatorlösung wird die Umesterung initiiert. Bei Erreichen des gewünschten Hydrolysegrades, im allgemeinen zwischen 40 und 100 Mol-%, wird die Umesterung abgebrochen. Bei sauer katalysierter Umesterung erfolgt der Abbruch durch Zugabe von alkalischen Reagentien. Bei der bevorzugten alkalisch katalysierten Umesterung erfolgt der Abbruch durch Zugabe von sauren Reagentien, wie Carbonsäuren oder Mineralsäuren. Nach Beendigung der Verseifungsreaktion wird das Produkt von der flüssigen Phase abgetrennt. Dies kann mittels gebräuchlicher Vorrichtungen zur Fest/Flüssig-Trennung erfolgen, beispielsweise mittels Zentrifugation oder Filtration. Es kann auch so vorgegangen werden, dass das alkoholische Lösungsmittel abdestilliert wird und suksessive mit Wasser ersetzt wird. Damit wird das Verseifungsprodukt in Form einer wässrigen Lösung erhalten.

Die Silikonorganocopolymere und deren Verseifungsprodukte eignen sich als Trenn- und Beschichtungsmittel. Beispielsweise zur Herstellung von abhäsiven (nicht klebenden) Überzügen im Release-Coating. Sie sind auch geeignet zur Beschichtung von Textil, Papier, Holz, Folien und Metallen, beispielsweise als Schutzbeschichtung oder als Antifouling-Beschichtung. Weitere Anwendungsgebiete sind im Baubereich als Additiv in zementären und nichtzementären Systemen und im Bautenschutz, insbesondere zur Herstellung von witterungsbeständigen Beschichtungen oder Dichtstoffen, dem Polish-Bereich, sowie als Additiv in Antischaumformulierungen, und die Textilbehandlung. Sie sind auch als Modifizierungs- und Hydrophobierungsmittel geeignet und als Additiv für Kosmetika, wie Haarsprays oder Haarfixiermittel. Insbesondere die Verseifungsprodukte der Silikonorganocopolymere eignen sich als Additive für Kosmetika, beispielsweise in Shampoos, Cremes und Haarsprays, sowie für den Einsatz im Polish-Bereich.

Die Silikonorganocopolymere werden vorzugsweise zur Herstellung von abhäsiven Überzügen, also klebrige Stoffe abweisende Überzüge, beispielsweise bei Trennpapier, Trennkunststofffolien oder Trennfilmen, verwendet. Die Silikonorganocopolymere können dazu durch Extrusion auf die Substrate aufgebracht werden oder bei der Herstellung der Folien in einem Coextrusionsvorgang mitaufgebracht werden. Die Silikonorganocopolymere können auch, vorzugsweise als Lösungen in organischen Lösungsmittel, wie Toluol, Benzin, Ethylacetat oder Xylol, auf klebrige Stoffe abweisend zu machenden Oberflächen aufgetragen werden. Das Auftragen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Mit der erfindungsgemäßen Vorgehensweise werden Silikonorganocopolymere zugänglich, welche sich durch hohe Transparenz (glasklare Produkte) und vernachlässigbare Migration des Silikonanteils auszeichnen. Aufgrund des Einsatzes des kennzeichnenden Lösungsmittelgemisches wird die Verträglichkeit zwischen dem Organopolymeranteil und dem Silikonanteil derart erhöht, dass die Phasenseparation, welche zu Trübung und Migrationseffekten führt, vermieden wird. Der Einsatz des Lösungsmittelgemisches führt auch zu Produkten mit einer vorteilhaften, definierten Schmelzrheologie, das heißt einer komplexen Schmelzviskosität von 5 bis 30000 Pas und einem Phasenwinkel δ von ≥ 45°, jeweils ab einer bestimmten Temperatur oder innerhalb eines Temperaturfensters im Temperaturbereich von 100°C bis 140°C.

Der Phasenwinkel δ ist wie folgt definiert: tan δ = G''/G', wobei G' der Speichermodul ist und die elastischen Eigenschaften beschreibt, und G" für den Verlustmodul steht, der eine Aussage über die viskosen Eigenschaften liefert. Diese definierte Schmelzviskosität bedeutet, dass die Silikonorganocopolymeren trotz des hohen Silikonanteils ein ausgeprägtes thermoplastisches Verhalten zeigen und deshalb sehr gut zu verarbeiten sind.

### Beispiele:

Regler (Mercapto-PDMS):
   Mercapto-Polydimethylsiloxan mit einer Kettenlänge von etwa 150 Dimethylsiloxan-Gruppen und etwa 3 Mercaptopropylgruppen in der Kette.
PDMS-Gemisch:
   Gemisch aus drei Polydimethylsiloxanen mit einer Kettenlänge von jeweils etwa 100 Dimethylsiloxan-Einheiten, welches 5
   Gew.-% unfunktionalisiertes Polydimethylsiloxan, 20 Gew.-% α-Monovinyl-Polydimethylsiloxan und 75 Gew.-%. α,ω-Divinyl-Polydimethylsiloxan enthält.

### Vergleichsbeispiel 1:

In einem 21-Glasrührtopf mit Ankerrührer, Rückflußkühler und Dosiereinrichtungen wurden 675.0 g Ethylacetat, 7.0 g PDMS-Gemisch, 0.8 g Regler, 1.1 g PPV (t-Butylperpivalat, 75 %-ige Lösung in Aliphaten) und 70.6 g Vinylacetat vorgelegt. Anschließend wurde die Vorlage bei einer Rührerdrehzahl von 200 Upm auf 70°C aufgeheizt. Nach Erreichen der Innentemperatur von 70°C wurde die Initiatordosierung (30.9 g Ethylacetat und 4.1 g PPV) mit einer Rate von 7.6 ml/h gestartet. Zehn Minuten nach dem Start der Initiatordosierung wurde die Monomerdosierung (56.5 g PDMS-Gemisch, 6.3 g Regler und 564.9 g Vinylacetat) mit einer Rate von 168 ml/h, eingefahren. Die Initiatordosierung erstreckte sich über einen Zeitraum von 310 Min, die Monomerdosierung endete 60 Min früher. Nach Ende beider Dosierungen wurde noch 90 Min bei 70°C nachpolymerisiert. Die erhaltene 2-phasige Polymerlösung wurde anschließend im Rotationsverdampfer unter Erwärmen zur Trockne eingeengt. Nach dem Abkühlen auf Raumtemperatur wurde ein hartes, trübes bzw. weißes Harz erhalten.
Analysen: FG: 96.8 %, GC-Analyse: Rest-VAc-Gehalt 0.96 %, Säurezahl 1.12 mgKOH/g, Viskosität(Höppler, 10 %-ige Lösung in Ethylacetat) = 3.60 mPas, SEC M_{w} = 65325, Mₙ = 20734, Polydispersität = 3.15;
2 Glasübergangstemperaturen (Tg): Tg1 = -121.0°C (Silikon), Tg2 = 34.1 °C (PVAc)

### Beispiel 2:

Es wurde analog Vergleichsbeispiel 1 vorgegangen, mit folgendem Unterschied:
Vorlage: 737.2 g Ethylacetat, 137.2 g Isopropanol, 9.5 g PDMS-Gemisch, 0.5 g PPV und 34.3 g Vinylacetat.
Initiatordosierung: 51.4 g Ethylacetat und 2.0 g PPV mit einer Rate von 11.5 ml/h über 310 Min.
Monomerdosierung: 76.2 g PDMS-Gemisch und 274.3 g Vinylacetat mit einer Rate von 93.4 ml/h über 240 Min.
Nachpolymerisation bei 70°C für 90 Min. Es wurde eine 1-phasige Polymerlösung erhalten, die wie oben beschrieben getrocknet wurde. Es resultierte ein bei Raumtemperatur transparentes Harz.
Analysen: FG: 99.0 %, GC-Analyse: Rest-VAc-Gehalt 0.019 %; Rest-Ethylacetat-Gehalt 0.8 %; Rest-Isopropanol-Gehalt 0.17 %; Säurezahl 2.81 mgKOH/g, Viskosität (Höppler, 10 %-ige Lösung in Ethylacetat) = 1.24 mPas, SEC M_{w} = 16179, Mₙ = 5634, Polydispersität = 2.9; Tg = 27.0°C.

### Vergleichsbeispiel 3:

Es wurde analog Vergleichsbeispiel 1 vorgegangen, mit folgendem Unterschied:
Vorlage: 93.1 g Ethylacetat, 140.6 g PDMS-Gemisch, 2.1 g PPV und 140.6 g Vinylacetat.
Initiatordosierung: 61.5 g Ethylacetat und 8.2 g PPV mit einer Rate von 15.2 ml/h über 310 Min.
Monomerdosierung: 1120.0 g Vinylacetat mit einer Rate von 302.5 ml/h über 240 Min.
Nachpolymerisation bei 70°C für 90 Min. Kurz nach dem Start der Initiatordosierung trat sehr starke Eindickung auf, worauf mit 400 ml Ethylacetat verdünnt wurde. Trocknung des Produktes wie oben beschrieben.
Analysen: nicht aufarbeitbar! Weiße, vernetzte Masse, von Lösungsmittel gequollen.

### Vergleichsbeispiel 4:

Es wurde analog Vergleichsbeispiel 1 vorgegangen, mit folgendem Unterschied:
Vorlage: 675.3 g Ethylacetat, 7.9 g PDMS-Gemisch, 1.1 g PPV und 70.6 g Vinylacetat.
Initiatordosierung: 30.9 g Ethylacetat und 4.1 g PPV mit einer Rate von 15.2 ml/h über 310 Min.
Monomerdosierung: 62.8 g PDMS-Gemisch und 565.0 g Vinylacetat mit einer Rate von 302.5 ml/h über 240 Min.
Nachpolymerisation bei 70°C für 120 Min. Trocknung des Produktes wie oben beschrieben.
Analysen: FG: 99.6 %, GC-Analyse: Rest-VAc-Gehalt < 5 ppm; Säurezahl 1.68 mgKOH/g, Viskosität (Höppler, 10 %-ige Lösung in Ethylacetat) = 6.1 mPas, SEC M_{w}= 135808, Mₙ = 23483, Polydispersität = 5.8; 2 Glasübergangstemperaturen (Tg): Tg1 =-123.0°C (Silikon), Tg2 = 32.8°C (PVAc)

### Beispiel 5:

In einem 120l-Rührkessel mit Ankerrührer, Rückflußkühler und Dosiereinrichtungen wurden 34.17 kg Ethylacetat, 3.42 kg Isopropanol, 189.6 g PDMS-Gemisch, 25.6 g PPV und 1.71 kg Vinylacetat vorgelegt. Anschließend wurde der Rührkessel bei einer Rührerdrehzahl von 95 Upm auf 70°C aufgeheizt. Nach Erreichen der Innentemperatur von 70°C wurde die Initiatordosierung (2.56 kg Ethylacetat und 99.7 g PPV) mit einer Rate von 512.0 g/h gestartet. Zehn Minuten nach dem Start der Initiatordosierung wurde die Monomerdosierung (1.52 kg PDMS-Gemisch und 13.67 kg Vinylacetat) mit einer Rate von 3.80 kg/h eingefahren. Die Initiatordosierung erstreckte sich über einen Zeitraum von 310 Min, die Monomerdosierung endete 60 Min früher. Nach Ende beider Dosierungen wurde noch 120 Min bei 70°C nachpolymerisiert. Die erhaltene 1-phasige Polymerlösung wurde anschließend im Rührkessel bei 95°C und Zugabe von 1000 ml Wasser destilliert und anschließend bei 120°C 1 Std. getrocknet. Nach dem Abkühlen auf Raumtemperatur wurde ein hartes, transparentes Harz erhalten.
Analysen: FG: 99.80 %, GC-Analyse: Rest-VAc-Gehalt < 5 ppm; Rest-Ethylacetat 89 ppm; Rest-Isopropanol 10 ppm, Säurezahl 2.80 mgKOH/g, Viskosität (Höppler, 10 %-ige Lösung in Ethylacetat) = 1.39 mPas, SEC M_{w} = 14521, Mₙ = 5445, Polydispersität = 2.67; Tg = 30.8°C.

### Beispiel 6:

Es wurde analog Beispiel 5 vorgegangen, mit folgendem Unterschied:
Vorlage: 29.95 kg Ethylacetat, 7.49 kg Isopropanol; 614.6 g PDMS-Gemisch, 18.7 g PPV und 1.25 kg Vinylacetat. Initiatordosierung: 1.87 kg Ethylacetat und 72.8 g PPV mit einer Dosierrate von 375.0 g/h über 310 min.
Monomerdosierung: 4.92 kg PDMS-Gemisch und 9.98 kg Vinylacetat mit einer Dosierrate von 3.73 kg/h über 240 min.
Die Aufarbeitung erfolgte analog Beispiel 5.
Analysen: FG: 99.67 %, GC-Analyse: Rest-VAc-Gehalt < 5 ppm; Säurezahl 3.93 mgKOH/g; Viskosität (Höppler, 10 %-ige Lösung in Ethylacetat) = 1.35 mPas, SEC M_{w} = 15494, Mₙ = 4471, Polydispersität D = 3.47; Tg = 24.9°C.

### Vergleichsbeispiel 7:

Es wird ein im Handel erhältliches Polyvinylacetat-Homopolymer-Festharz (Vinnapas B 1,5 der Wacker Polymer Systems) bei der Testung eingesetzt.

### Beispiel 8:

In einem 2 Liter Rührkessel (drucklos), mit Rückflußkühler, Dosiereinrichtungen und einem Ankerrührer wurden 556.0 g einer 47.6 %-igen Lösung eines Copolymers mit 12.28 Mol-% (10.75 Gew.-%) Dimethylsiloxan-Einheiten und 87.72 Mol-% (89.25 Gew.-%) Vinylacetat-Einheiten in Methanol - hergestellt nach Beispiel 5 - vorgelegt und auf einen Festgehalt von 20 % mit Methanol verdünnt. Diese Lösung wurde dann auf 35°C aufgeheizt. Anschließend wurden 4.6 ml 45 %-ige Natronlauge (in Wasser/Methanol) schnell zugegeben. Exakt 9 Minuten nach der Laugenzugabe wurde mit konzentrierter Essigsäure auf einen pH-Wert von 7 eingestellt. Um das gefällte Verseifungsprodukt als wässrige Lösung-zu erhalten, wurde die Suspension aufgeheizt zum Destillieren und das Destillat wurde durch Wasser ersetzt. Dieser Vorgang wurde so lange wiederholt, bis das gesamte Methanol durch Wasser ersetzt wurde.
Es wurde eine wässrige Lösung eines Dimethylsiloxan-Vinylacetat-Vinylalkohol-Terpolymers erhalten, mit der Zusammensetzung 8.2 Mol-% (13.9 Gew.-%) Vinylacetat-Einheiten, 79.5 Mol-% (68.3 Gew.-%) Vinylalkohol-Einheiten, 12.3 Mol-% (17.8 Gew.-%) Dimethylsiloxan-Einheiten.
Analysen: Kolloidale Lösung, transparent bis leicht trüb; FG: 14.25 %; Säurezahl SZ: 3.6 mgKOH/g; Verseifungszahl VZ: 90.4 mgKOH/g; pH-Wert der 4 %-igen Lösung: 6.0 Teilchengrößenbestimmung bei einer 9.7 %-igen wässrigen Lösung: Zahlenmittlere Teilchengröße: 171.7 nm

### Beispiel 9:

In einem 2 Liter Rührkessel (drucklos), mit Rückflußkühler, Dosiereinrichtungen und einem Ankerrührer wurden 495.5 g einer 50.8 %-igen Polymerlösung eines Copolymers mit 26.37 Mol-% (23.54 Gew.-%) Dimethylsiloxan-Einheiten und 73.63 Mol-% (76.46 Gew.-%) Vinylacetat-Einheiten in Methanol, hergestellt nach Beispiel 2, in Methanol vorgelegt und auf einen Festgehalt von 20 % mit Methanol verdünnt. Diese Lösung wurde dann auf 35°C aufgeheizt. Anschließend wurden 4.6 ml 45 %-ige Natronlauge (in Wasser/Methanol) schnell zugegeben. Exakt 13 Minuten nach der Laugenzugabe wurde mit konzentrierter Essigsäure auf einen pH-Wert von 7 eingestellt. Um das gefällte Verseifungsprodukt als wässrige Lösung zu erhalten, wurde die Suspension aufgeheizt zum Destillieren und das Destillat wurde durch Wasser ersetzt. Dieser Vorgang wurde wiederholt, bis das gesamte Methanol durch Wasser ersetzt wurde.
Es wurde eine wässrige Lösung eines Dimethylsiloxan-Vinylacetat-Vinylalkohol-Terpolymers erhalten, mit der Zusammensetzung 5.9 Mol-% (9.4 Gew.-%) Vinylacetat-Einheiten, 67.7 Mol-% (54.7 Gew.-%) Vinylalkohol-Einheiten, 26.4 Mol-% (35.9 Gew.-%) Dimethylsiloxan-Einheiten.
Analysen: trübe, kolloidale Lösung
FG: 9.43 %; SZ: 1.1 mgKOH/g; VZ: 61.2 mgKOH/g;
pH-Wert der 4 %-igen Lösung: 6.85
Teilchengrößenbestimmung bei einer 9.43 %-igen wässrigen Lösung: Zahlenmittlere Teilchengröße: 245.6 nm

### Anwendungstechnische Prüfungen:

### Bestimmung der Releasewerte:

Die Silikonorganocopolymere aus den (Vergleichs)Beispielen wurden in Toluol oder Ethylacetat mit einer Konzentration von 40 oder 50 Gew.-% gelöst. PP-Folien (Polypropylen-Folien) oder PET-Folien (Polyethylenterephthalat-Folien) wurden jeweils mit der Lösung mit Hilfe eines Glasstabs beschichtet (Schichtdicke ca. 40 µm), und die abhäsiven Eigenschaften wurden nach FINAT Test Methode Nr.3 mit den im Handel erhältlichen TESA Testklebebändern A 7475, K 7476, und T 154 bestimmt. Die Ergebnisse sind in der nachfolgenden Tabelle 1 zusammengefasst. Je niedriger der Testwert, umso höher ist der Releaseeffekt (umso besser das Releaseverhalten). Bei einem Polymer, das so adhäsiv ist, dass sich der Tesa-Streifen nicht mehr von der Beschichtung mit diesem Polymer trennen läßt, wird die Bezeichnung "verblockt" verwendet. Hier gibt es keine abhäsiven Eigenschaften mehr, ein Messwert kann nicht erhalten werden.

### Migrationstest:

Die Silikonorganocopolymere aus den (Vergleichs)Beispielen wurden in Toluol oder Ethylacetat mit einer Konzentration von 40 Gew.-% gelöst. Die PP-Folien (Polypropylen-Folien) oder PET-Folien (Polyethylenterephthalat-Folien) wurden jeweils mit der Lösung mit Hilfe eines Glasstabs beschichtet (Schichtdicke ca. 40 µm). Die ausgehärtete Beschichtung wurde mit Tesa-Film beklebt, das Tesa-Band mit dem Finger festgedrückt, und danach abgezogen. Der Vorgang wurde zweimal wiederholt. Zur Beurteilung wurde das Tesa-Band auf sich selbst geklebt ("Loop-Test") und auseinandergezogen.
Die Beurteilung erfolgt mit dem Schulnotensystem in 6 Stufen: Note 1: keine Migration, Tesa klebt genauso gut wie vorher (= sehr gutes Resultat);
Note 6: sehr starke Migration; Tesaband klebt nicht mehr auf sich selbst, Kleber durch Silikon geschädigt (= sehr schlechtes Resultat)

### Klebkrafterhaltung bzw. Restklebkraft:

Analog der obigen Tests wurde das Silikonorganocopolymere auf Folie aufgetragen und ausgehärtet. Die ausgehärtete Beschichtung wurde mit Tesa-Film beklebt, das Tesa-Band mit dem Finger festgedrückt, und der Tesa-Film 24 h auf der beschichtete Folie belassen. Anschließend wurde der Tesa-Film abgezogen und dann auf ein unbeschichtetes Substrat geklebt.
Die Messung der Kraft für das Abziehen wurde bezogen auf den Kraftaufwand für einen gleichen Tesa-Streifen, der nicht vorher auf eine beschichtete Folie geklebt war.
Bei diesem Test ist ein hoher Prozentwert am besten; dies bedeutet 100 % ist erreicht bei keiner Klebkraftminderung und keiner Kleberschädigung.

Optische Beurteilung der Transparenz:
1: absolut transparent, glasklar
2: ganz leichte Eintrübung
3: merkliche Eintrübung
4: starke Eintrübung, Produkt ist weiß, undurchsichtig

Die Ergebnisse der vorgenannten Tests sind in Tabelle 1 zusammengefasst.

### Blocktest:

Ein DIN A4 Papier wurde jeweils mit einer 40 %-igen Lösung des Silikonorganocopolymeren in Ethylacetat aus den (Vergleichs)Beispielen beschichtet (Dicke: 500 Mikrometer mit Rakel) und für 5 Tage getrocknet.
Anschließend wurde eine Probe mit einer Fläche von 5 cm x 5 cm herausgeschnitten. Die Probestreifen wurden jeweils auf gleich dimensionierte Probenstreifen von unbehandeltem Papier gelegt, anschließend zwischen zwei Glasplatten gelegt, und 24 Stunden lang bei 40°C (T > Tg!) mit einem Gewicht von 5 kg beschwert. Die Verblockung wurde getestet, indem die beiden Papierflächen händisch auseinandergezogen wurden.
Note 1: Papiere lassen sich leicht trennen, keine Verblockung, kein Papierriß, keine Papierfasern verbleiben auf der Beschichtung
Note 2: Papiere lassen sich schwerer trennen, auf der Beschichtung bleiben einige Papierfasern, leichter Papierriß; leichtes Verblocken
Note 3: Die Papiere sind ideal miteinander verklebt und nicht mehr zu trennen, keinerlei abhäsive Wirkung des Polymers.
Die Ergebnisse sind in Tabelle 2 zusammengefasst.

### Schmelzrheologie:

Die Schmelzrheologie wurde mit dem Gerät Bohlin CVO 120 HR in einem Temperaturbereich von 100°C bis 180°C, in Ausnahmefällen bis 220°C bestimmt. Es wurde das Meßsystem Platte/Platte gewählt, mit einem Spaltabstand von 200 bis 1000 µm (je nach Probe). Mit oszillierenden Messungen bei einer Frequenz von 1 Hz wurden die komplexe Schmelzviskosität η*, der Speichermodul G' und der Verlustmodul G'' bestimmt. Der Phasenwinkel δ wird mit tan δ = G''/G' bestimmt.
Die Ergebnisse sind in Tabelle 3 zusammengefasst.

**Tabelle 1:**

| Bsp. | Vorlage PDMS % | Vorlage Regler % | GT IP | RE1 N/m | RE2 N/m | RE3 N/m | MI Note | RK % | T(Note) Phasen |
|---|---|---|---|---|---|---|---|---|---|
| Vbsp. 1 FG: 50 % | 11.1 | 11.1 | - | 152 | - | 68 | 3-4 | 85 | 4, weiß, 2-phasig |
| Bsp. 2 FG: 30 % | 11.1 | - | 34.8 | 81 | 37 | 46 | 1-2 | 99 | 1 1-phasig |
| V.bsp. 3 FG: 90 % | 100 | - | - | - | - | - | - | - | 4, weiß, vernetzt |
| V.bsp. 4 FG: 50 % | 11.1 | - | - | - | - | - | - | - | 4, weiß, vernetzt |
| Bsp. 5 FG: 30 % | 11.1 | - | 20 | 131 | 62 | 61 | 1-2 | 97 | 1 1-phasig |
| Bsp. 6 FG: 30 % | 11.1 | - | 44.7 | 37 | 42 | 3.3 | 1 | 97.5 | 1 1-phasig |
| V.bsp. 7 | - | - | - | vb | vb | vb | - | - | 1 1-phasig |
| GT IP = Gewichtsteile Isopropanol, bezogen auf das Gesamtge-wicht der eingesetzten Monomere. | | | | | | | | | |
| RE1 = Release-Wert mit Testklebeband A7475 | | | | | | | | | |
| RE2 = Release-Wert mit Testklebeband K7476 | | | | | | | | | |
| RE3 = Release-Wert mit Testklebeband T154 | | | | | | | | | |
| Vb = verblockt | | | | | | | | | |
| MI = Migrationsbewertung | | | | | | | | | |
| RK = Restklebekraft | | | | | | | | | |
| T = Optische Beurteilung der Transparenz des getrockneten Silikonorganocopolymeren | | | | | | | | | |
| Phasen = Phasenverhalten des Silikonorganocopolymers, 30 %-ig in Ethylacetat | | | | | | | | | |

Der Vergleich der Ergebnisse in Tabelle 1 für Vergleichsbeispiel 1 (nur Ethylacetat) mit den Beispielen 2, 5, 6 (Lösungsmittelgemisch Ethylacetat/Isopropanol) zeigt, dass nur mit dem Lösungsmittelgemisch bezüglich Migration und Restklebkraft die gewünschten Produkte erhalten werden.

Der Vergleich der Vergleichsbeispiele 1, 3 und 4 (nur Ethylacetat) mit den Beispielen 2, 5, 6 (Lösungsmittelgemisch Ethylacetat/Isopropanol) zeigt, dass nur mit dem Lösungsmittelgemisch bezüglich Phasenverhalten und Transparenz die gewünschten Produkte erhalten werden.

Ein Vergleich von Vergleichsbeispiel 7 mit den Beispielen 5, 2 und 6 belegt, dass mit der Zunahme des Silikonanteils die Releasewerte abnehmen. Dies unterstreicht die abhäsive Wirkung des Silikonanteils. Ganz ohne Silikon wird keinerlei Releasevehalten beobachtet, wie Vergleichsbeispiel 7 belegt.

**Tabelle 2:**

| Beispiel | Blocktest |
|---|---|
| V.bsp. 1 | 2 |
| Bsp. 2 | 1 |
| V.bsp. 3 | Nicht möglich |
| V.bsp. 4 | Nicht gemessen |
| Bsp. 5 | 2 |
| Bsp. 6 | 1 |
| V.bsp. 7 | 3 |

Der Vergleich der Beispiele 2, 5 und 6 mit dem Vergleichsbeispiel 7 zeigt erneut, dass durch Modifizierung mit Silikonanteilen das Blockverhalten von Vinylacetat-Festharzen deutlich verbessert wird.

**Tabelle 3:**

| | Werte bei Temperatur 100 °C | | | | |
|---|---|---|---|---|---|
| Beispiel | δ (°) | η* (Pas) | G' (Pa) | G'' (Pa) | Bemerkung |
| V.bsp. 1 | 54.2 | 11767 | 43302 | 59930 | Thermoplast, 2-phasig |
| Bsp. 2 | 56.2 | 895 | 3132 | 4674 | Thermoplast, 1-phasig |
| V.bsp. 3 | - | - | - | - | Vernetzt |
| Bsp. 5 | 77.8 | 950 | 1256 | 5835 | Thermoplast, 1-phasig |
| | | | | | |

| | Werte bei T = 140°C | | | | |
|---|---|---|---|---|---|
| V.bsp. 4 | 43.5 | 5047 | 22985 | 21845 | Vernetzt, 2-phasig |
| Bsp. 6 | 48.7 | 93 | 387 | 440 | Thermoplast, 1-phasig |
| δ = Phasenwinkel; η* = Komplexe Schmelzviskosität; G' = Speichermodul; G'' = Verlustmodul | | | | | |

Der Vergleich der Beispiele 2, 5 und 6 mit den Vergleichsbeispielen 1, 3 und 4 zeigt, dass nur mit dem anspruchsgemäßen Lösungsmittelgemisch die geforderte Schmelzrheologie erhalten wird.

## Patentansprüche

1. Silikonorganocopolymere und deren Verseifungsprodukte, erhältlich mittels Polymerisation in einem nichtwässrigen Lösungsmittel, in Gegenwart von Radikalinitiatoren, von a1) ≥ 50 Gew.-% eines oder mehrerer Monomere aus der Gruppe umfassend Vinylester von unverzweigten oder verzweigten Alkylcarbonsäuren mit 1 bis 15 C-Atomen, und
a2) 0 bis 20 Gew.-% eines oder mehrerer Monomere aus der Gruppe umfassend einfach ungesättigte Olefine sowie Diene, und
b) 1 bis 50 Gew.-% von einem oder mehreren Silikonen mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis ≤ 50/50 eingesetzt werden, und
c) 0 bis 10 Gew.-% von einem oder mehreren hydrolysierbaren Silan-Monomeren aus der Gruppe umfassend ethylenisch ungesättigte, hydrolysierbare Siliciumverbindungen und hydrolysierbare Siliciumverbindungen aus der Gruppe der Mercaptosilane,
wobei die Angaben in Gew.-% für die Komponenten a) bis c) jeweils auf das Gesamtgewicht der eingesetzten Monomere bezogen sind und sich auf 100 Gew.-% aufaddieren,
**dadurch gekennzeichnet, dass** als nichtwässriges Lösungsmittel ein Gemisch aus mindestens zwei nichtwässrigen Lösungsmitteln eingesetzt wird, von denen mindestens ein nichtwässriges Lösungsmittel eine Übertragungskonstante Cₛ zu Vinylacetat von > 20 x 10⁻⁴ bei 70°C aufweist,
und gegebenenfalls Verseifung der damit erhältlichen Produkte.

2. Silikonorganocopolymere und deren Verseifungsprodukte gemäß Anspruch 1 mit einer komplexen Schmelzviskosität von 5 bis 30000 Pas und einem Phasenwinkel δ von ≥ 45°, jeweils im Bereich von 100°C bis 140°C.

3. Silikonorganocopolymere und deren Verseifungsprodukte gemäß Anspruch 1 oder 2, **dadurch gekennzeichnet, dass** als Silikon b) ein oder mehrere Silikone aus der Gruppe umfassend α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane eingesetzt werden.

4. Silikonorganocopolymere und deren Verseifungsprodukte gemäß Anspruch 1 bis 3, **dadurch gekennzeichnet, dass** als Silikon b) α,ω-Divinyl-Polydimethylsiloxane, oder ein binäres Gemisch von α,ω-Divinyl-Polydimethylsiloxanen mit α-Monovinyl-Polydimethylsiloxanen, oder ein ternäres Gemisch von α,ω-Divinyl-Polydimethylsiloxanen, α-Monovinyl-Polydimethylsiloxanen mit unfunktionalisierten Polydimethylsiloxanen verwendet wird.

5. Silikonorganocopolymere und deren Verseifungsprodukte gemäß Anspruch 4, **dadurch gekennzeichnet, dass** bei den binären oder ternären Gemischen der Anteil der unfunktionellen Polydialkylsiloxane bis zu 15 Gew.-%, der Anteil der monofunktionellen Polydialkylsiloxane bis zu 50 Gew.-%, und der Anteil der difunktionellen Polydialkylsiloxane mindestens 50 Gew.-% beträgt, jeweils bezogen auf das Gesamtgewicht des Silikonanteils b).

6. Silikonorganocopolymere und deren Verseifungsprodukte nach Anspruch 1 bis 5, **dadurch gekennzeichnet, dass** als hydrolysierbare Silanmonomere c) ethylenisch ungesättigte und damit copolymerisierbare Siliciumverbindungen der allgemeinen Formel R³SiR²₀₋₂(OR⁴)₁₋₃ eingesetzt werden, wobei R² die Bedeutung C₁- bis C₃-Alkylrest, C₁- bis C₃-Alkoxyrest oder Halogen hat, R³ die Bedeutung CH₂=CR³-(CH₂)₀₋₁ oder CH₂=CR⁵CO₂(CH₂)₁₋₃ hat, R⁴ ein unverzweigter oder verzweigter, gegebenenfalls substituierter Alkylrest mit 1 bis 12 C-Atomen ist oder ein Acylrest mit 2 bis 12 C-Atomen ist, wobei R⁴ gegebenenfalls durch eine Ethergruppe unterbrochen sein kann, und R⁵ für H oder CH₃ steht.

7. Silikonorganocopolymere und deren Verseifungsprodukte nach Anspruch 1 bis 6, **dadurch gekennzeichnet, dass** als Monomere a) Vinylacetat, oder Vinylacetat und Ethylen, oder Vinylacetat und Vinylester von α-verzweigten Monocarbonsäuren mit 9 oder 10 C-Atomen oder Vinylacetat, Ethylen und Vinylester von α-verzweigten Monocarbonsäuren mit 9 oder 10 C-Atomen, enthalten sind und als Silikon b) ein binäres Gemisch von α,ω-Divinyl-Polydimethylsiloxan mit α-Monovinyl-Polydimethylsiloxan oder ein ternäres Gemisch von α,ω-Divinyl-Polydimethylsiloxan, α-Monovinyl-Polydimethylsiloxan mit unfunktionalisiertem Polydimethylsiloxan verwendet wird.

8. Silikonorganocopolymere und deren Verseifungsprodukte nach Anspruch 1 bis 7, **dadurch gekennzeichnet, dass** das Lösungsmittelgemisch ein oder mehrere Lösungsmittel enthält aus der Gruppe umfassend Tetrahydrofuran, Chloroform, Heptan, Cyclohexan, Petrolether, Diethylether, Methylethylketon, p-Dioxan, Ethylacetat, Methylacetat, Isopropanol, Ethanol, Methanol, t-Butanol, Aceton, Toluol oder Benzol.

9. Silikonorganocopolymere und deren Verseifungsprodukte nach Anspruch 1 bis 8, **dadurch gekennzeichnet, dass** der Anteil an Lösungsmittel mit Cₛ > 20 x 10⁻⁴ im Lösungsmittelgemisch 3 bis 50 Gew.-% beträgt.

10. Silikonorganocopolymere und deren Verseifungsprodukte nach Anspruch 1 bis 9, **dadurch gekennzeichnet, dass** das Lösungsmittelgemisch Ethanol und/oder Isopropanol enthält.

11. Silikonorganocopolymere und deren Verseifungsprodukte nach Anspruch 1 bis 10, **dadurch gekennzeichnet, dass** ein Lösungsmittelgemisch aus Ethylacetat und Isopropanol eingesetzt wird.

12. Verfahren zur Herstellung von Silikonorganocopolymere und deren Verseifungsprodukte mittels Polymerisation in einem nichtwässrigen Lösungsmittel, in Gegenwart von Radikalinitiatoren, von
a1) ≥ 50 Gew.-% eines oder mehrerer Monomere aus der Gruppe umfassend Vinylester von unverzweigten oder verzweigten Alkylcarbonsäuren mit 1 bis 15 C-Atomen, und
a2) 0 bis 20 Gew.-% eines oder mehrerer Monomere aus der Gruppe umfassend einfach ungesättigte Olefine sowie Diene, und
b) 1 bis 50 Gew.-% von einem oder mehreren Silikonen mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000,
wobei 85 bis 100 Gew.-% der Silikone b) ein bis zwei polymerisierbare Gruppen enthalten, wobei Silikone b) mit nur einer polymerisierbaren Gruppe nur im Gemisch mit Silikonen b) mit zwei polymerisierbaren Gruppen und in einem Gewichtsverhältnis ≤ 50/50 eingesetzt werden, und
c) 0 bis 10 Gew.-% von einem oder mehreren hydrolysierbaren Silan-Monomeren aus der Gruppe umfassend ethylenisch ungesättigte, hydrolysierbare Siliciumverbindungen und hydrolysierbare Siliciumverbindungen aus der Gruppe der Mercaptosilane,
wobei die Angaben in Gew.-% für die Komponenten a) bis c) jeweils auf das Gesamtgewicht der eingesetzten Monomere bezogen sind und sich auf 100 Gew.-% aufaddieren,
**dadurch gekennzeichnet, dass** als nichtwässriges Lösungsmittel ein Gemisch aus mindestens zwei nichtwässrigen Lösungsmitteln eingesetzt wird, von denen mindestens ein nichtwässriges Lösungsmittel eine Übertragungskonstante Cₛ zu Vinylacetat von > 20 x 10⁻⁴ bei 70°C aufweist,
und gegebenenfalls Verseifung der damit erhältlichen Produkte.

13. Verfahren nach Anspruch 12, **dadurch gekennzeichnet, dass** 3 bis 40 Gew.-% eines Gemisches aus den Monomeren a), b) und gegebenenfalls c) in den gewünschten Mengenverhältnissen vorgelegt werden und der Rest der Monomere a), b) und gegebenenfalls c) als Gemisch zudosiert wird.

14. Verfahren nach Anspruch 12 und 13, **dadurch gekennzeichnet, dass** das damit erhaltene Silikonorganocopolymere in alkoholischer Lösung, in Gegenwart von sauren oder alkalischen Katalysatoren, verseift wird.

15. Verwendung der Silikonorganocopolymere und deren Verseifungsprodukte aus Anspruch 1 bis 11 als Trenn- und Beschichtungsmittel zur Herstellung von abhäsiven Überzügen.

16. Verwendung der Silikonorganocopolymere und deren Verseifungsprodukte aus Anspruch 1 bis 11 als Beschichtungsmittel zur Beschichtung von Textil, Papier, Holz, Folien und Metallen.

17. Verwendung der Silikonorganocopolymere und deren Verseifungsprodukte aus Anspruch 1 bis 11 im Bautenschutz zur Herstellung von witterungsbeständigen Beschichtungen oder Dichtstoffen.

18. Verwendung der Silikonorganocopolymere und deren Verseifungsprodukte aus Anspruch 1 bis 11 als Modifizierungs- und Hydrophobierungsmittel.

19. Verwendung der Silikonorganocopolymere und deren Verseifungsprodukte aus Anspruch 1 bis 11 als Additiv für Kosmetika.

20. Verwendung der Silikonorganocopolymere und deren Verseifungsprodukte aus Anspruch 1 bis 11 als Additiv im Polish-Bereich.

21. Verwendung der Silikonorganocopolymere und deren Verseifungsprodukte aus Anspruch 1 bis 11 als Additiv für Antischaum-Formulierungen.

22. Verwendung der Silikonorganocopolymere und deren Verseifungsprodukte aus Anspruch 1 bis 11 zur Textilbehandlung.

23. Verwendung der Silikonorganocopolymere und deren Verseifungsprodukte aus Anspruch 1 bis 11 als Additiv im Baubereich für zementäre und nichtzementäre Systeme.

## Claims

1. Organic silicone copolymers and hydrolysis products thereof, obtainable by polymerizing
a1) ≥ 50% by weight of one or more monomers from the group consisting of vinyl esters of branched and unbranched alkyl carboxylic acids having from 1 to 15 carbon atoms and
a2) from 0 to 20% by weight of one or more monomers from the group consisting of monounsaturated olefins and also dienes and
b) from 1 to 50% by weight of one or more silicones with the general formula R¹ₐR₃₋ₐSiO(SiR₂O)ₙSiR₃₋ₐR¹ₐ, in which each R is identical or different, and a monovalent, unsubstituted or substituted alkyl radical or alkoxy radical having in each case from 1 to 18 carbon atoms, R¹ is a polymerizable group, a is 0 or 1, and n = 10 to 1000,
from 85 to 100% by weight of the silicones b) containing from one to two polymerizable groups, with silicones b) having only one polymerizable group being used only in a mixture with silicones b) having two polymerizable groups and in a weight ratio ≤ 50/50, and
c) from 0 to 10% by weight of one or more hydrolysable silane monomers from the group consisting of ethylenically unsaturated hydrolysable silicon compounds and hydrolysable silicon compounds from the group of the mercaptosilanes,
the amounts in % by weight for components a) to c) being based in each case on the overall weight of the monomers used and adding up to 100% by weight,
in a nonaqueous solvent in the presence of free-radical initiators,
**characterized in that** it comprises as nonaqueous solvent a mixture of at least two nonaqueous solvents of which at least one has a transfer transfer constant Cₛ to vinyl acetate of > 20 × 10⁻⁴ at 70°C is used,
and, where appropriate, the products thus obtainable are hydrolysed.

2. Organic silicone copolymers and hydrolysis products thereof according to Claim 1, having a complex melt viscosity of from 5 to 30,000 Pas and a phase angle δ of ≥ 45°, in each case in the range from 100°C to 140°C.

3. Organic silicone copolymers and hydrolysis products thereof according to Claim 1 or 2, **characterized in that** use is made as silicone b) of one or more silicones from the group consisting of α,ω-divinyl-polydimethylsiloxanes, α,ω-di(3-acryloyloxypropyl)-polydimethylsiloxanes, α,ω-di(3-methacryloyloxypropyl)-polydimethylsiloxanes, α-monovinyl-polydimethylsiloxanes, α-mono(3-acryloyloxypropyl)-polydimethylsiloxanes, α-mono(acryloyloxymethyl)-polydimethylsiloxanes, and α-mono(3-methacryloyloxypropyl)-polydimethylsiloxanes.

4. Organic silicone copolymers and hydrolysis products thereof according to any of Claims 1 to 3, **characterized in that** use is made as silicone b) of α,ω-divinyl-polydimethylsiloxanes or of a binary mixture of α,ω-divinylpolydimethylsiloxanes with α-monovinylpolydimethylsiloxanes, or of a ternary mixture of α,ω-divinyl-polydimethylsiloxanes, α-monovinylpolydimethylsiloxanes, and unfunctionalized polydimethylsiloxanes.

5. Organic silicone copolymers and hydrolysis products thereof according to Claim 4, **characterized in that**, in the case of the binary or ternary mixtures, the fraction of the unfunctional polydialkylsiloxanes is up to 15% by weight, the fraction of the monofunctional polydialkylsiloxanes is up to 50% by weight, and the fraction of the difunctional polydialkylsiloxanes is at least 50% by weight, based in each case on the overall weight of the silicone fraction b).

6. Organic silicone copolymers and hydrolysis products thereof according to any of Claims 1 to 5, **characterized in that** use is made as hydrolysable silane monomers c) of ethylenically unsaturated and hence copolymerizable silicon compounds of the general formula R³SiR²₀₋₂(OR⁴)₁₋₃, in which R² has the definition C₁ to C₃ alkyl radical, C₁ to C₃ alkoxy radical or halogen, R³ has the definition CH₂=CR³-(CH₂)₀₋₁ or CH₂=CR⁵CO₂(CH₂)₁₋₃, R⁴ is a branched or unbranched, unsubstituted or substituted alkyl radical having from 1 to 12 carbon atoms or is an acyl radical having from 2 to 12 carbon atoms, it being possible for R⁴, where appropriate, to be interrupted by an ether group, and R⁵ stands for H or CH₃.

7. Organic silicone copolymers and hydrolysis products thereof according to any of Claims 1 to 6, **characterized in that** use is made as monomers a) of vinyl acetate, or vinyl acetate and ethylene, or vinyl acetate and vinyl esters of α-branched monocarboxylic acids having 9 or 10 carbon atoms, or vinyl acetate, ethylene, and vinyl esters of α-branched monocarboxylic acids having 9 or 10 carbon atoms, and as silicone b) of a binary mixture of α,ω-divinyl-polydimethylsiloxane with α-monovinyl-polydimethylsiloxane or a ternary mixture of α,ω-divinylpolydimethylsiloxane, α-monovinyl-polydimethylsiloxane, and unfunctionalized polydimethylsiloxane.

8. Organic silicone copolymers and hydrolysis products thereof according to any of Claims 1 to 7, **characterized in that** the solvent mixture comprises one or more solvents selected from the group consisting of tetrahydrofuran, chloroform, heptane, cyclohexane, petroleum ether, diethyl ether, methyl ethyl ketone, p-dioxane, ethyl acetate, methyl acetate, isopropanol, ethanol, methanol, t-butanol, acetone, toluene, and benzene.

9. Organic silicone copolymers and hydrolysis products thereof according to any of Claims 1 to 8, **characterized in that** the fraction of solvent with Cₛ > 20 × 10⁻⁴ in the solvent mixture is from 3 to 50% by weight.

10. Organic silicone copolymers and hydrolysis products thereof according to any of Claims 1 to 9, **characterized in that** the solvent mixture comprises ethanol and/or isopropanol.

11. Organic silicone copolymers and hydrolysis products thereof according to any of Claims 1 to 10, **characterized in that** a solvent mixture of ethyl acetate and isopropanol is used.

12. Process for preparing organic silicone copolymers and hydrolysis products thereof by polymerizing
a1) ≥ 50% by weight of one or more monomers from the group consisting of vinyl esters of branched and unbranched alkyl carboxylic acids having from 1 to 15 carbon atoms and
a2) from 0 to 20% by weight of one or more monomers from the group consisting of monounsaturated olefins and also dienes and
b) from 1 to 50% by weight of one or more silicones with the general formula R¹ₐR₃₋ₐSiO(SiR₂O)ₙSiR₃₋ₐR¹ₐ, in which each R is identical or different, and a monovalent, unsubstituted or substituted alkyl radical or alkoxy radical having in each case from 1 to 18 carbon atoms, R¹ is a polymerizable group, a is 0 or 1, and n = 10 to 1000,
from 85 to 100% by weight of the silicones b) containing from one to two polymerizable groups, with silicones b) having only one polymerizable group being used only in a mixture with silicones b) having two polymerizable groups and in a weight ratio ≤ 50/50, and
c) from 0 to 10% by weight of one or more hydrolysable silane monomers from the group consisting of ethylenically unsaturated hydrolysable silicon compounds and hydrolysable silicon compounds from the group of the mercaptosilanes,
the amounts in % by weight for components a) to c) being based in each case on the overall weight of the monomers used and adding up to 100% by weight, in a nonaqueous solvent in the presence of free-radical initiators,
**characterized in that** it comprises as nonaqueous solvent a mixture of at least two nonaqueous solvents of which at least one has a transfer constant Cₛ to vinyl acetate of > 20 × 10⁻⁴ at 70°C is used,
and, where appropriate, hydrolysing the products thus obtainable are hydrolysed.

13. Process according to Claim 12, **characterized in that** from 3 to 40% by weight of a mixture of the monomers a), b), and, where appropriate, c) in the desired proportions is introduced as the initial charge and the remainder of the monomers a), b), and, where appropriate, c) is metered in as a mixture.

14. Process according to Claim 12 or 13, **characterized in that** the resulting organic silicone copolymer is hydrolysed in alcoholic solution in the presence of acidic or alkaline catalysts.

15. The use of an organic silicone copolymer or hydrolysis product thereof from any of Claims 1 to 11 as release agents and coating materials for producing abhesive coatings.

16. The use of an organic silicone copolymer or hydrolysis product thereof from any of Claims 1 to 11 as coating materials for coating textile, paper, wood, films, and metals.

17. The use of an organic silicone copolymer or hydrolysis product thereof from any of Claims 1 to 11 in architectural preservation for producing weathering-resistant coatings or sealants.

18. The use of an organic silicone copolymer or hydrolysis product thereof from any of Claims 1 to 11 as modifiers and water repellents.

19. The use of an organic silicone copolymer or hydrolysis product thereof from any of Claims 1 to 11 as an additive for cosmetics.

20. The use of an organic silicone copolymer or hydrolysis product thereof from any of Claims 1 to 11 as an additive in the polish sector.

21. The use of an organic silicone copolymer or hydrolysis product thereof from any of Claims 1 to 11 as an additive for antifoam formulations.

22. The use of an organic silicone copolymer or hydrolysis product thereof from any of Claims 1 to 11 for textile treatment.

23. The use of an organic silicone copolymer or hydrolysis product thereof from any of Claims 1 to 11 as an additive in the construction sector for cementitious and noncementitious systems.

## Revendications

1. Organocopolymères de silicone et leurs produits de saponification, pouvant être obtenus par polymérisation dans un solvant non aqueux, en présence d'initiateurs de radicaux, de
a1) ≥ 50% en poids d'un ou de plusieurs monomères du groupe comprenant les esters vinyliques d'acides alkylcarboxyliques non ramifiés ou ramifiés comprenant 1 à 15 atomes de carbone et
a2) 0 à 20% en poids d'un ou de plusieurs monomères du groupe comprenant les oléfines monoinsaturées ainsi que les diènes et
b) 1 à 50% en poids d'un ou de plusieurs silicones présentant la formule générale R¹ₐR₃₋ₐSiO(SiR₂O)ₙSiR₃₋ₐR¹ₐ, où R est identique ou différent et signifie un radical alkyle ou alcoxy monovalent, le cas échéant substitué, comprenant à chaque fois 1 à 18 atomes de carbone, R¹ signifie un groupe polymérisable, a vaut 0 ou 1 et n = 10 à 1000, et où 85 à 100% en poids des silicones b) contiennent un à deux groupes polymérisables, les silicones b) avec seulement un groupe polymérisable n'étant utilisés qu'en mélange avec des silicones b) présentant deux groupes polymérisables et dans un rapport pondéral ≤ 50/50 et
c) 0 à 10% en poids d'un ou de plusieurs monomères de silane hydrolysables du groupe comprenant les composés de silicium éthyléniquement insaturés, hydrolysables et les composés de silicium hydrolysables du groupe des mercaptosilanes,
les indications en % en poids pour les composants a) à c) se rapportant à chaque fois au poids total des monomères utilisés et s'ajoutant en formant 100%,
**caractérisés en ce qu'**on utilise comme solvant non aqueux un mélange d'au moins deux solvants non aqueux, dont au moins un solvant non aqueux présente une constante de transfert Cₛ à l'acétate de vinyle > 20 × 10⁻⁴ à 70°C et on saponifie le cas échéant les produits ainsi obtenus.

2. Organocopolymères de silicone et leurs produits de saponification selon la revendication 1, présentant une viscosité de masse fondue complexe de 5 à 30000 Pa.s et un angle de phase δ ≥ 45°, à chaque fois dans la plage de 100°C à 140°C.

3. Organocopolymères de silicone et leurs produits de saponification selon la revendication 1 ou 2, **caractérisés en ce qu'**on utilise comme silicone b) un ou plusieurs silicones du groupe comprenant les α,ω-dvinylpolydiméthylsiloxanes, les α,ω-di-(3-acryloxypropyl)-polydiméthylsiloxanes, les α,ω-di-(3-méthacryloxypropyl)-polydiméthylsiloxanes, les α-monovinyl-polydiméthylsiloxanes, les α-mono-(3-acryloxypropyl)-polydiméthylsiloxanes, les α-mono-(acryloxyméthyl)-polydiméthylsiloxanes, les α-mono-(3-méthacryloxypropyl)-polydiméthylsiloxanes:

4. Organocopolymères de silicone et leurs produits de saponification selon la revendication 1 à 3, **caractérisés en ce qu'**on utilise comme silicone b) des α,ω-divinyl-polydiméthylsiloxanes, ou un mélange binaire d'α,ω-divinyl-polydiméthylsiloxanes avec des α-monovinyl-polydiméthylsiloxanes, ou un mélange ternaire d'α,ω-divinylpolydiméthylsiloxanes, d'α-monovinyl-polydiméthylsiloxanes avec des polydiméthylsiloxanes non fonctionnalisés.

5. Organocopolymères de silicone et leurs produits de saponification selon la revendication 4, **caractérisés en ce que** dans les mélanges binaires ou ternaires, la proportion de polydialkylsiloxanes non fonctionnels représente jusqu'à 15% en poids, la proportion des polydialkylsiloxanes monofonctionnels représente jusqu'à 50% en poids, et la proportion de polydialkylsiloxanes difonctionnels représente au moins 50% en poids, à chaque fois par rapport au poids total de la proportion de silicone b).

6. Organocopolymères de silicone et leurs produits de saponification selon la revendication 1 à 5, **caractérisés en ce qu'**on utilise comme monomères de silane hydrolysables c) des composés de silicium éthyléniquement insaturés et donc copolymérisables de formule générale R³SiR²₀₋₂(OR⁴)₁₋3, où R² signifie un radical alkyle en C₁ à C₃, un radical alcoxy en C₁ à C₃ ou halogène, R³ signifie CH₂=CR³-(CH₂)₀₋₁ ou CH₂=CR⁵CO₂(CH₂)₁₋₃, R⁴ représente un radical alkyle non ramifié ou ramifié, le cas échéant substitué comprenant 1 à 12 atomes de carbone ou un radical acyle comprenant 2 à 12 atomes de carbone, R⁴ pouvant le cas échéant être interrompu par un groupe éther, et R⁵ représente H ou CH₃.

7. Organocopolymères de silicone et leurs produits de saponification selon la revendication 1 à 6, **caractérisés en ce qu'**ils contiennent comme monomères a) de l'acétate de vinyle ou de l'acétate de vinyle et de l'éthylène ou de l'acétate de vinyle et des esters vinyliques d'acides monocarboxyliques ramifiés en α comprenant 9 ou 10 atomes de carbone, ou de l'acétate de vinyle, de l'éthylène et des esters vinyliques d'acides carboxyliques ramifiés en α comprenant 9 ou 10 atomes de carbone, et on utilise comme silicone b) un mélange binaire d'α,ω-divinyl-polydiméthylsiloxane avec de l'α-monovinyl-polydiméthylsiloxane ou un mélange ternaire d'α,ω-divinyl-polydiméthylsiloxane, d'α-monovinyl-polydiméthylsiloxane avec un polydiméthylsiloxane non fonctionnalisé.

8. Organocopolymères de silicone et leurs produits de saponification selon la revendication 1 à 7, **caractérisés en ce que** le mélange de solvants contient un ou plusieurs solvants du groupe comprenant le tétrahydrofuranne, le chloroforme, l'heptane, le cyclohexane, l'éther de pétrole, le diéthyléther, la méthyléthylcétone, le p-dioxanne, l'acétate d'éthyle, l'acétate de méthyle, l'isopropanol, l'éthanol, le méthanol, le t-butanol, l'acétone, le toluène ou le benzène.

9. Organocopolymères de silicone et leurs produits de saponification selon la revendication 1 à 8, **caractérisés en ce que** la proportion de solvant présentant un Cₛ > 20 × 10⁻⁴ dans le mélange de solvants est de 3 à 50% en poids.

10. Organocopolymères de silicone et leurs produits de saponification selon la revendication 1 à 9, **caractérisés en ce que** le mélange de solvants contient de l'éthanol et/ou de l'isopropanol.

11. Organocopolymères de silicone et leurs produits de saponification selon la revendication 1 à 10, **caractérisés en ce qu'**on utilise un mélange de solvants d'acétate d'éthyle et d'isopropanol.

12. Procédé pour la préparation d'organocopolymères de silicone et leurs produits de saponification par polymérisation dans un solvant non aqueux, en présence d'initiateurs de radicaux, de
a1) ≥ 50% en poids d'un ou de plusieurs monomères du groupe comprenant les esters vinyliques d'acides alkylcarboxyliques non ramifiés ou ramifiés comprenant 1 à 15 atomes de carbone et
a2) 0 à 20% en poids d'un ou de plusieurs monomères du groupe comprenant les oléfines monoinsaturées ainsi que les diènes et
b) 1 à 50% en poids d'un ou de plusieurs silicones présentant la formule générale R¹ₐR₃₋ₐSiO(SiR₂O)ₙSiR₃₋ₐR¹ₐ, où R est identique ou différent et signifie un radical alkyle ou alcoxy monovalent, le cas échéant substitué, comprenant à chaque fois 1 à 18 atomes de carbone, R¹ signifie un groupe polymérisable, a vaut 0 ou 1 et n = 10 à 1000, et où 85 à 100% en poids des silicones b) contiennent un à deux groupes polymérisables, les silicones b) avec seulement un groupe polymérisable n'étant utilisés qu'en mélange avec des silicones b) présentant deux groupes polymérisables et dans un rapport pondéral ≤ 50/50 et
c) 0 à 10% en poids d'un ou de plusieurs monomères de silane hydrolysables du groupe comprenant les composés de silicium éthyléniquement insaturés, hydrolysables et les composés de silicium hydrolysables du groupe des mercaptosilanes,
les indications en % en poids pour les composants a) à c) se rapportant à chaque fois au poids total des monomères utilisés et s'ajoutant en formant 100%,
**caractérisé en ce qu'**on utilise comme solvant non aqueux un mélange d'au moins deux solvants non aqueux, dont au moins un solvant non aqueux présente une constante de transfert Cₛ à l'acétate de vinyle > 20 × 10⁻⁴ à 70°C et on saponifie le cas échéant les produits ainsi obtenus.

13. Procédé selon la revendication 12, **caractérisé en ce qu'**on dispose au préalable 3 à 40% en poids d'un mélange constitué par les monomères a), b) et le cas échéant c) dans les rapports de mélange souhaités et le reste des monomères a), b) et le cas échéant c) est ajouté en dosant sous forme de mélange.

14. Procédé selon les revendications 12 et 13, **caractérisé en ce que** l'organocopolymère de silicone ainsi obtenu est saponifié en solution alcoolique, en présence de catalyseurs acides ou alcalins.

15. Utilisation des organocopolymères de silicone et leurs produits de saponification des revendications 1 à 11 comme agent de séparation, et de revêtement pour la fabrication de revêtements repoussant les salissures.

16. Utilisation des organocopolymères de silicone et leurs produits de saponification des revendications 1 à 11 comme agent de revêtement destiné au revêtement du textile, du papier, du bois, de feuilles et de métaux.

17. Utilisation des organocopolymères de silicone et leurs produits de saponification des revendications 1 à 11 dans la protection des bâtiments pour la fabrication de revêtements ou de masses d'étanchéité résistants aux intempéries.

18. Utilisation des organocopolymères de silicone et leurs produits de saponification des revendications 1 à 11 comme agent de modification et d'hydrofugation.

19. Utilisation des organocopolymères de silicone et leurs produits de saponification des revendications 1 à 11 comme additif pour les produits cosmétiques.

20. Utilisation des organocopolymères de silicone et leurs produits de saponification des revendications 1 à 11 comme additif dans le domaine du lustrage.

21. Utilisation des organocopolymères de silicone et leurs produits de saponification des revendications 1 à 11 comme additif pour les formulations d'anti-mousses.

22. Utilisation des organocopolymères de silicone et leurs produits de saponification des revendications 1 à 11 pour le traitement du textile.

23. Utilisation des organocopolymères de silicone et leurs produits de saponification des revendications 1 à 11 comme additif dans le domaine de la construction pour des systèmes cimentés ou non cimentés.
